# EUROPEAN PATENT SPECIFICATION

(11) **EP 1 770 957 B1**
(45) Date of publication and mention of the grant of the patent: **04.11.2015**
(21) Application number: 06019056.8
(22) Date of filing: 12.09.2006
(51) Int. Cl.: H04L 12/58, H04L 29/06, H04N 21/2387

(54) **Mobile communication terminal for playing contents and method thereof**
Mobiles Kommunikationsendgerät und Verfahren zum Abspielen von Inhalt
Terminal de communication mobile et procédé de reproduction de contenu

(30) Priority: 29.09.2005 KR 20050091614
(43) Date of publication of application: 04.04.2007
(73) Proprietor: LG Electronics Inc., Yeongdeungpo-gu Seoul 150-721 (KR)
(72) Inventor: Lee, Jae-Wook, Seongbuk-Gu, Seoul (KR)
(74) Representative: Katérle, Axel

(56) References cited:
- EP-A- 1 447 999
- US-A- 6 064 380
- US-A1- 2003 018 581
- US-A1- 2005 043 060

## Description

This application claims the priority benefit of the Korean Patent Application No. 10-2005-0091614, filed on September 29, 2005.

### BACKGROUND OF THE INVENTION

### 1. Field of the Invention

The present invention relates to a mobile communication terminal, and more particularly, to a mobile communication terminal for playing multimedia contents and a method thereof.

### 2. Description of the Background Art

As mobile communications and information processing techniques continue to develop, consumers wish to purchase mobile communication terminals (mobile terminals) that have a variety of advanced functions.

According to recent trends, mobile terminal manufacturers (providers) are developing mobile terminals that can support advanced graphics display capabilities, which allow to play (reproduce) different types of multimedia contents. As data transfer rates of mobile communication networks continue to improve, multimedia contents can be provided from a server in a streaming manner, and mobile terminals need to support such multimedia contents.

However, in the related art mobile communication terminals, if the user stops playing multimedia contents that were received in a streaming manner or if the multimedia contents are partially played due to an inferior connection state, the user has to play (reproduce) the multimedia contents from an initial position. Namely, if play back of multimedia contents (e.g., a movie) is interrupted for some reason, play back must be resumed from the beginning. As a result, undesirably high communication fees or costs (e.g., air time, access charges, downloading fees, etc.) would be incurred to the user.

Document US 6,064,380 concerns network multimedia file processing. When a user desires to terminate a multimedia file being presented on a display device, a completion point file position of the multimedia file presentation is saved in a memory. Thereafter, it is possible to play the multimedia file from the point of time of the saved completion point file position.

Document EP 1 447 999 A2 concerns an asynchronous messaging based system for publishing and accessing content and accessing applications on a network with mobile devices.

Document US 2005/0043060 A1 concerns a method and an apparatus for scheduling presentation of digital content on a personal communication device. Digital content is stored either in whole or part in cache memory on a client device until an appropriate time when the digital content is digitally packaged and presented to particular users over those user's client devices.

### SUMMARY OF THE INVENTION

Some or all of the above problems are overcome by a method for playing contents in a mobile communication terminal having the feature of claim 1 and a mobile communication terminal having the feature of claim 13.

A feature of the present invention is the recognition by the inventors about the disadvantages and drawbacks of the related art as described above.

One aspect of the present invention is to provide a user device (e.g., a mobile communication terminal) capable of playing content information from a position where play was interrupted by storing playing information of a specific content in a storage unit and by reading the playing information, and to provide a method thereof.

Another aspect of the present invention is to provide a network entity (e.g., a server) for playing content information by storing session information with a user device (e.g., a mobile communication terminal) for a specific content in a storage unit and by transmitting the content from a position where transmission was interrupted by reading the information when the mobile communication terminal requests transmission of the specific content, and to provide a method thereof.

To achieve these aspects and advantages in accordance with the present invention, as embodied and broadly described herein, there is provided according to an embodiment a method for playing contents in a mobile communication terminal, comprising: connecting to a server and thereby selecting a specific content from one or plural contents; searching whether or not previous playing information for the selected specific content exists in a storage unit; reading the previous playing information and requesting the server to transmit the specific content from a specific position according to the playing information; and playing the specific content after receiving it from the specific position.

Preferably, the method for playing contents in a mobile communication terminal may further comprise requesting the server to transmit the specific content from an initial position if the playing information does not exist in the storage unit; and playing the specific content after receiving it from the initial position.

Preferably, the method for playing contents in a mobile communication terminal may further comprise storing or upgrading playing information for the specific content in the storage unit when a play stop command for the specific content is inputted while the content is being played; and stopping the play for the content.

Preferably, the playing information may comprise an identifier for the specific content and a previous playing position. The identifier can comprise at least one of a name for the specific content, a copyright owner, a content provider, and a total time for playing the content. The previous playing position comprises previous playing time or the number of frames that have been played. Preferably, the playing information may further comprise an address for the specific content, that is, an URL.

According to another embodiment, there is provided a method for playing contents in a mobile communication terminal, comprising: selecting a content that has not been completely played; reading previous playing information for the received content from a storage unit and requesting a server to transmit the playing information from a specific position; and playing the specific content after receiving it from the specific position.

According to an embodiment, the step of selecting a content that has not been completely played can comprise connecting to a server and thereby selecting a specific content from one or plural contents; searching whether or not previous playing information for the selected specific content exists in a storage unit; and when the playing information for the specific content exists in the storage unit, determining the specific content as a content that has not been completely played.

According to an embodiment, the step of selecting a content that has not been completely played can comprise: displaying a list for said one or plural contents that have not been completely played; and selecting a specific content from the displayed list. In the step of displaying, the playing information stored in the storage unit can be displayed after being synthesized, or a list for displaying said one or plural contents is requested by connecting to a server and then is displayed.

Preferably, the playing information may comprise an identifier for the specific content and a previous playing position. Preferably, the playing information may further comprise an address for the specific content, that is, a URL, and a user's ID and password. The user's ID and password can be used in order to omit processes to connect to the server by the user.

To achieve these and other advantages and in accordance with the present invention, as embodied and broadly described herein, there is also provided according to an embodiment a method for providing contents from a server, comprising: connecting to a server by a mobile communication terminal, and selecting a specific content from one or plural contents; searching whether or not previous session information of the mobile communication terminal for the selected specific content exists in a session database (DB) by the server; reading the session information as the search result and then transmitting the specific content to the mobile communication terminal from a specific position by the server.

Preferably, when the session information exists in a session DB, the method further comprises the server's asking to the mobile communication terminal whether the specific content is to be played from the specific position or from the initial position. If the mobile communication terminal selects the specific position, the server transmits the specific content from the specific position. On the contrary, if the mobile communication terminal selects the initial position, the server deletes the session information and transmits the specific content from the initial position.

Preferably, when the mobile communication terminal stops playing the selected content, the session information for the selected content can be upgraded to include a position where the play was interrupted in the session DB.

Preferably, the session information may comprise a content address, a content identifier, log-in information, and session time. The session time denotes duration for which the multimedia contents are transmitted to the mobile communication terminal, which may be obtained by deducting approximately 10 seconds from a substantial transmission time.

To achieve these and other advantages and in accordance with the purpose of the present invention, as embodied and broadly described herein, there is also provided according to an embodiment a mobile communication terminal, comprising: an RF transceiver; a display unit; a sound output unit; a storage unit for storing playing information for contents; and a controller for controlling the RF transceiver, the display unit, the sound output unit, and the storage unit so that a content that was received from a server through the RF transceiver can be played through the display unit and the sound output unit. The controller judges whether or not the specific content to be played by a user was incompletely played according to the playing information in the storage unit. If the specific content was incompletely played as the result of the judgment, the controller requests the server to transmit/ play the specific content from a specific position according to the playing information.

According to another embodiment, there is provided a server comprising: a network interface; a storage unit for storing session information for a content requested by a mobile communication terminal; and a controller for controlling the network interface and the storage unit so that the content requested by the mobile communication terminal can be transmitted through the network interface. The controller judges whether or not the specific content requested by the mobile communication terminal was incompletely transmitted according to the session information in the storage unit. If the specific content was incompletely transmitted as the result of the judgment, the controller requests the server to re-transmit the specific content from a specific position according to the session information.

According to an embodiment, a communication system comprising: a mobile terminal; and a server to receive a request for a transmission of a specific content from the mobile terminal, to determine if session information for the requested content exists in a storage unit, and to transmit the requested content based on the session information if the session information exists or to transmit the requested content in its entirety if the session information does not exist.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram showing an exemplary structure of a mobile communication terminal according to the present invention;
FIG. 2 is a structural view schematically showing an exemplary connection between the mobile communication terminal of FIG. 1 and a server according to the present invention;
FIG. 3 is an exemplary view showing an example of playing information that can be stored in a storage unit of the mobile communication terminal of FIG. 1;
FIG. 4 is a flowchart showing an exemplary method for playing contents that can be implemented in the mobile communication terminal of FIG. 1;
FIG. 5 is a flowchart showing an exemplary method for playing another contents that can be implemented in the mobile communication terminal of FIG. 1;
FIG. 6 is a block diagram showing an exemplary structure of a server according to the present invention;
FIG. 7 is an exemplary view showing an example of session information that can be stored in a storage unit of the server of FIG. 6; and
FIG. 8 is a flowchart showing an exemplary method for playing contents that can be implemented in the server of FIG. 6.

### DETAILED DESCRIPTION OF THE PREFERRED EMBODIMENTS

Reference will now be made in detail to the preferred embodiments of the present invention, examples of which are illustrated in the accompanying drawings. Some features that may be part of the present invention will not be described in great detail, in order to prevent the gist of the present invention from being obscured. However, those skilled in the art would clearly understand that certain features not described in detail would also constitute the present invention.

Hereinafter, certain embodiments of the present invention will be explained in more detail with reference to the attached drawings.

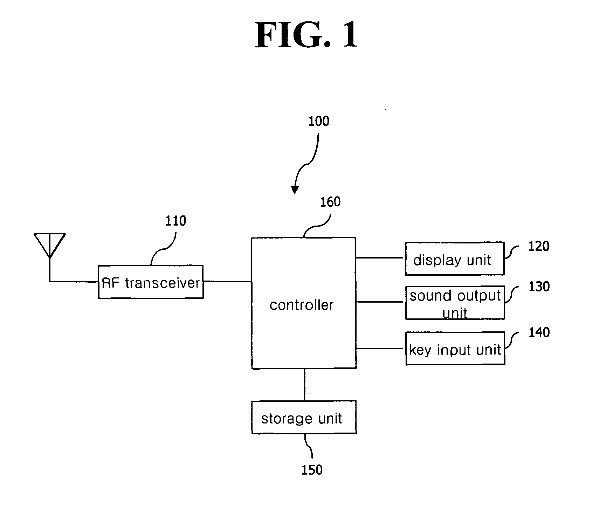

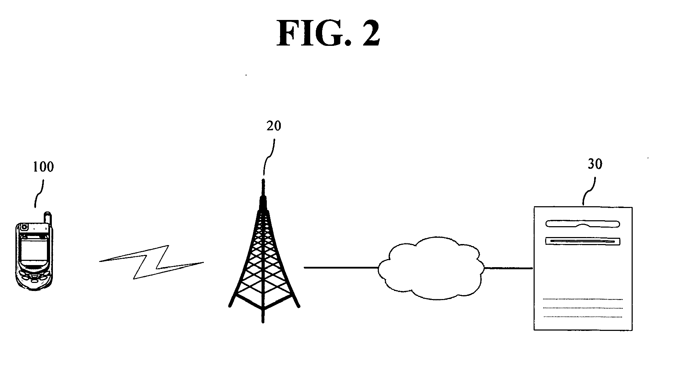

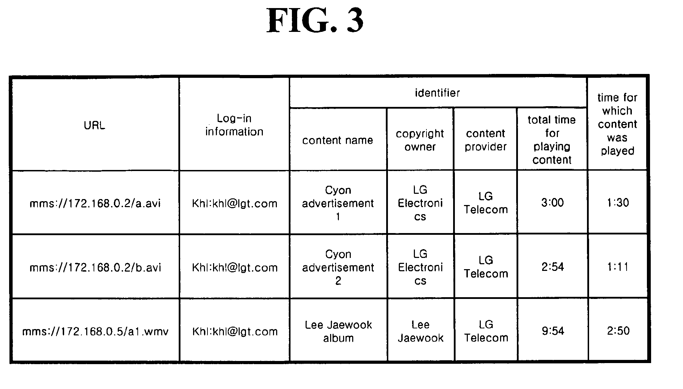

FIG. 1 is a block diagram showing an exemplary structure of a mobile communication terminal according to an embodiment of the present invention, FIG. 2 is an exemplary structural view schematically showing a connection between the mobile communication terminal of FIG. 1 and a server according to the present invention, and FIG. 3 shows an example of playing information that can be stored in a storage unit of the mobile communication terminal of FIG. 1.

As shown, a mobile communication terminal 100 according to an embodiment of the present invention may generally include an RF transceiver 110 (or other communication interfaces), a display unit 120 (or other visual output units), a sound output unit 130 (or other audible output units), a key input unit 140 (or other input units), a storage unit 150 (or other memory units), and a controller 160 (or other processors). All the components of the mobile communication terminal 100 are operatively coupled and configured.

The RF transceiver 110 can be composed of electronic components for transmitting and receiving voice and data signals. Preferably, the RF transceiver 110 can be composed of electronic components for supporting various types of telecommunication schemes, such as but not limited to, CDMA, GSM, GPRS, TDMA, IMT-2000, WCDMA, and HSDPA. The RF transceiver 110 is electrically connected to the controller 160, which performs various control functions. As shown in FIG. 2, the RF transceiver 110 can be used to perform communication with a server 30 through a base station 20. The RF transceiver 110 can receive contents from the server 30, e.g., via a network, in particular, in a streaming method.

The display unit 120 can be composed of a liquid crystal display (LCD) device, an organic light emitting diode (OLED), or various other display devices. The display unit 120 can include one or more displays and is electrically connected to the controller 160, which performs various control functions. The display unit 120 may display functions of the mobile terminal 100, or display contents received through the RF transceiver 110 upon play (reproduce) thereof.

The sound output unit 130 is electrically connected to the controller 130, which performs various control functions. The sound output unit 130 can output audio data (i.e., sounds) upon playing contents received through the RF transceiver 110.

The key input unit 140 can be composed of one or more keys or buttons to allow information to be input by a user, or a touch pad (or other touch-sensitive device) as an integral part of or separate from the display unit 120. The key input unit 140 is connected to the controller 160, which performs various control functions.

The storage unit 150 can be implemented as a flash memory, a NAND flash, a hard disc, other types of storage or memory device or any combination thereof. The storage unit 150 can store playing information for multimedia contents (e.g., video clips, movies, animation, etc.) received from the server 30 through the RF transceiver 110, which will be explained with reference to FIG. 3.

As shown in FIG. 3, the playing information can comprise a content address such as a uniform resource locator (URL), log-in information for a server, an identifier for a content, time information, etc. to allow the multimedia contents to be played by the mobile communication terminal.

The playing time may denote a time duration (or period) for which the multimedia contents have been played by the mobile communication terminal 100, which may be obtained by deducting approximately 10 seconds from a substantial playing time. In another modified example, the total time and the playing time can denote the total number of frames of multimedia contents and the number of played frames, respectively. The identifier can be composed of a name for a specific content, a copyright owner, a content provider, a total time for playing the content, etc. The playing information can be composed of a so-called cookie used for a web browser.

When a user wishes to play (i.e., play back) multimedia contents received, e.g., from the server or other source, the mobile terminal determines whether or not the content was played using the playing information. If the play of the content has not been completed (namely, play back has been interrupted due to connection problems, signal interference, etc.), the content can be played from the position where the play was interrupted. Namely, the play back (reproduction) can be resumed (continued) from the point in time (e.g., specific hours, minutes and/or seconds information, or particular frame number, etc.) of the interruption. For instance, the mobile communication terminal 100 can request the server to transmit the content from 1 minute 30 seconds according to previous playing information for mms://172.168.0.2/a.avi content that was selected by the user.

Preferably, the playing information can be updated when the play of the content is interrupted by the user's request or the connection is cut-off due to an unexpected reason. If the play of the content is completed, the content may be deleted from the storage unit 150. For instance, if mms://172.168.0.2/b.avi content is interrupted after being played for 01 minute 11 seconds, the play time of the playing information is updated to 01:11. Also, if the mms://172.168.0.2/b.avi content is completely played, the playing information of the content may be deleted from the storage unit 150.

The controller 160 may be composed of a plurality of semiconductor devices (and/or other circuits, electrical components, etc.), and is electrically connected to the RF transceiver 110, the display unit 120, the sound output unit 130, the key input unit 140, and the storage unit 150.

Here, the controller 160 may determine whether a specific content selected by the user has not been completely played according to the playing information that has been stored in the storage unit 150. If it is determined that the specific content has not been completely played, the controller 160 requests the server, via the RF transceiver 110, to transmit the appropriate portion of the specific content starting from a final playing position (i.e., the most recent frame number, play back time, etc. prior to interruption), as opposed to having to receive the content (e.g., movie) from the beginning portion of the content.

Here, it can be understood that the particular play back resume point (time or frame) may be adjusted. For example, the user may want to resume viewing of the multimedia contents a few seconds or frames prior to the actual interrupted time or frame, such that the user may briefly re-call the previous scenes that occurred a short time before the actual interruption. As such, a portion of the multimedia contents (such as 10 seconds worth of content prior to the current scene being played back) may always be buffered such that when an interruption occurs, a few seconds of previously viewed scenes can be played back again upon resuming the play (reproduce) function.

So far, an exemplary construction of the mobile communication terminal was explained. Hereafter, an exemplary operation for playing contents from a position where a play was interrupted according to the read playing information will be explained.

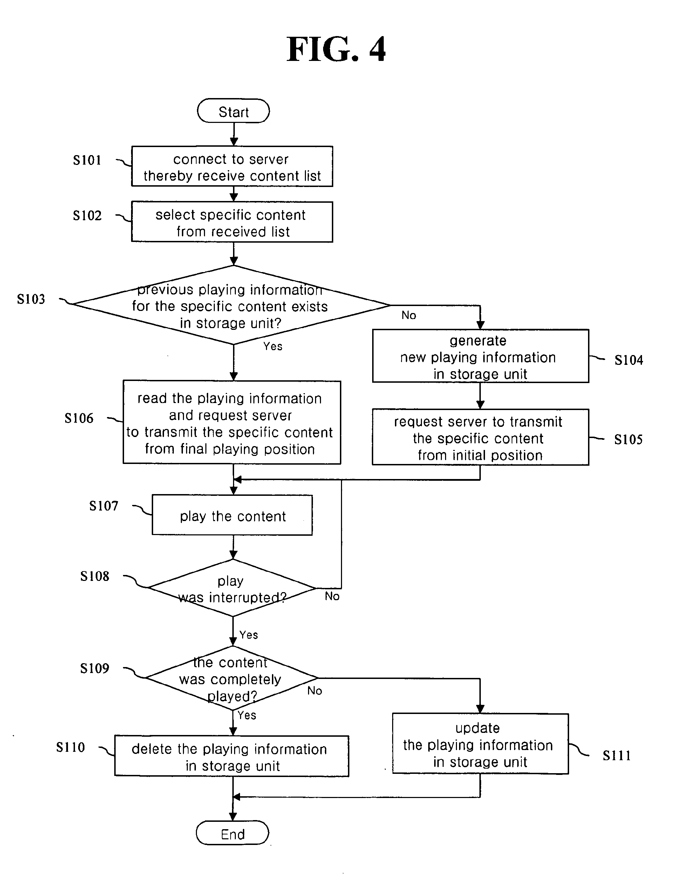

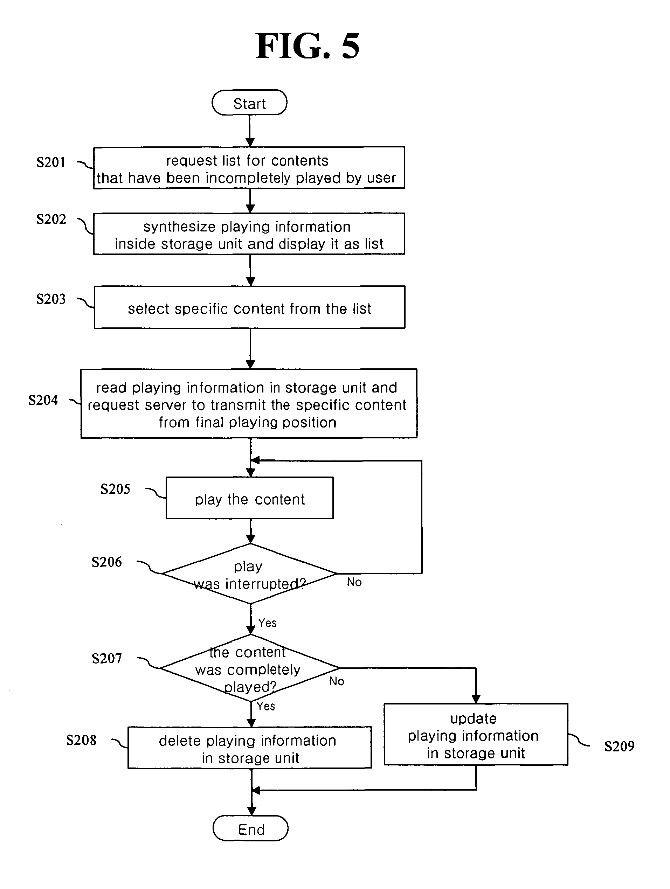

FIG. 4 is a flowchart showing an exemplary method for playing certain contents that can be implemented in the mobile communication terminal of FIG. 1 or in other suitable device, and FIG. 5 is a flowchart showing an exemplary method for playing other different contents that can be implemented in the mobile communication terminal of FIG. 1 or in other suitable device, all according to the present invention.

Referring to FIG. 4, it can be determined whether or not a content selected by the user was played by referring to the playing information that was stored within the storage unit 150. If the content had been played, the controller requests the server to transmit the content from a position where the play was interrupted (or at an appropriate time point or frame number just before the interruption). For example, if a content list that contains information about titles, scenes, play back time, frame numbers, etc. is received by connecting to the server 30 (S101), the user can select a specific content (e.g., a specific title, a specific program, a specific scene, frame, time point, etc.) from the received list (S102).

Then, it is determined whether or not playing information for the selected content exists in the storage unit 150 (S103). If the playing information for the specific content does not exist, new playing information is generated and stored in the storage unit 150 (S 104) and then the mobile communication terminal may request the server to transmit the specific content from the initial position (e.g., from the beginning of the content in a streaming method) (S105).

However, if playing information for the selected specific content exists in the storage unit 150, the playing information is read and thus the mobile communication terminal requests the server to transmit the specific content from the final playing position (e.g., the last successfully played frame, time period, or the like in a streaming method) (S106). For instance, as shown in FIG. 3, the mobile communication terminal can request the server to transmit a content of an advertisement 1 from a particular time point of 1 minute 30 seconds.

Then, the requested content (S105, S106) is received and played (S107).

Then, if the play for the content is interrupted (S108), it is determined whether or not the content has been completely played (S109). If the content was completely played, the playing information for the content may be deleted from the storage unit 150 (S110). However, if the content has not been completely played, the playing information stored in the storage unit 150 may be updated, e.g., to indicate the interrupted point for the content (S111). Then the updated playing information can be used to completely play the content from the interrupted point at next time(s).

Referring to FIG. 5, when the user selects a specific content from a list displaying one or more contents that have not been completely played, the playing information stored in the storage unit is read, and thus the mobile communication terminal can then request the server to transmit the specific content from the desired play back position (i.e., time point, frame, scene number, etc.).

Namely, when the user requests a list that indicates one or more contents that have not been completely played (S201), the playing information stored in the storage unit may be displayed in a list format after being generated (S202). The displayed list can comprise a name of the content, a total playing time, a time period during which the content has been played, or the like.

Then, if the user selects a specific content from the list (S203), the playing information in the storage unit 150 is read and based on the read playing information, the mobile communication terminal requests the server to transmit the specific content from the final playing position (S204). Then, the requested content is received from the server and is played by the mobile terminal (S205).

Then, if the play of the content is interrupted (S206), whether or not the content was completely played is judged (S207). If the content was completely played, the playing information for the content stored in the storage unit 150 may be deleted (S208). However, if the content was not completely played, the playing information in the storage unit 150 may be updated, e.g., so that such playing information can be used to completely play the content at next time(s) (S209).

Although the present invention is not limited to the two methods described above, these two exemplary methods for playing contents can be further modified. For instance, even if a content selected by the user was not completely played, the content can be played from the initial position not from the position where the play was interrupted. That is, the actual playing position when resuming play back of the content can be selected by the user (or a particular time point or frame before the point of interruption can be set as a default) so that the user can have a better viewing experience.

As another modification, if the user requests a list that indicates one or more contents that have not been completely played (S201), the list can be received by connecting to the server.

So far, a method for recording and/or storing playing information by the mobile communication terminal and requesting a server to transmit a content from a position where a play was interrupted was explained.

Hereinafter, a server for recording and/or storing session information and transmitting a content from a position where a transmission was interrupted to a mobile communication terminal, and an operation of the server will be explained.

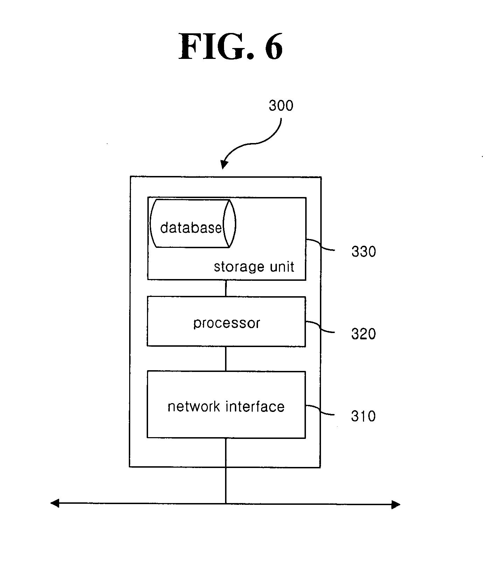

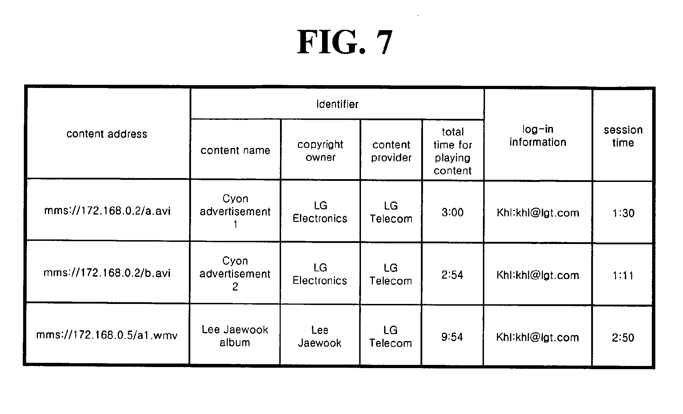

FIG. 6 is a block diagram showing an exemplary structure of a server according to an embodiment of the present invention, and FIG. 7 shows an example of session information that can be stored in a storage unit, e.g., of the server 300 in FIG. 6.

Referring to FIG. 6, the server 300 may comprise a network interface 310, a processor 320, and a storage unit 330, all operatively coupled and configured. The server 300 can be the server 30 in Fig. 2.

The network interface 310 may be composed of electronic components for transmitting and receiving packet data over a wired interface, such as an ATM or an Ethernet. The network interface 310 is connected to the processor 320, which provides control functions.

The processor 320 may be composed of electronic components, such as transistors, and is electrically connected to the network interface 310 and the storage unit 330. The processor 320 can transmit multimedia contents to the mobile communication terminal in a streaming manner through the network interface 310, and can store session information for the contents with the mobile communication terminal in the storage unit 330 by means of a database or can update the session information.

The storage unit 330 can be implemented as a memory device, a hard disc, or the like, and can allow recording and reading of session information by the controller 320. As shown in FIG. 7, the session information can comprise a content address, a content identifier, log-in information, a session time, etc. The session time may denote a duration (or time period) during which the multimedia contents have been transmitted to the mobile communication terminal, which may be obtained by deducting approximately 10 seconds from substantial (or actual) transmission time. The identifier can comprise a name for a specific content, a copyright owner, a content provider, a total time for playing the content, and the like.

When the server 300 is to transmit multimedia contents to the mobile communication terminal in accordance with a request therefrom, the server can determine whether the mobile communication terminal has previously played the content that was received, according to the session information. If the mobile communication terminal has not completely played the content that it received, the content is played again from the position where the play was interrupted or from a time point (frame number, etc) just prior to the interruption.

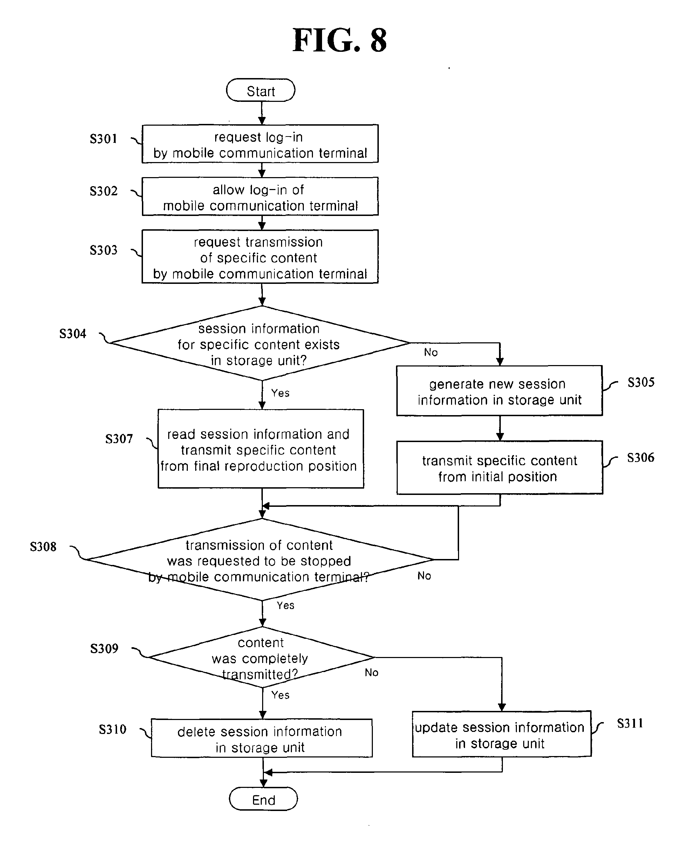

Accordingly, when transmission of multimedia contents is interrupted by the user's request or due other communication failures, the session information can be updated, which will be discussed below referring to Fig. 8. Also, when the transmission of the content is completed, the session information can be deleted from the storage unit 330.

So far, an exemplary construction of the server according to the present invention was explained. Hereafter, an exemplary operation of the server for transmitting contents from a position where a transmission was interrupted according to the session information will be explained.

FIG. 8 is a flowchart showing an exemplary method for playing contents that can be implemented in the server of FIG. 6 or other suitable device according to an embodiment of the present invention.

As shown, when the mobile communication terminal requests log-in (access or connection) from the server 300 (S301), the server allows the log-in (access or connection) in accordance with optional authentication procedures, such as by checking whether an ID and a password are properly inputted (S302).

Then, if the mobile communication terminal requests a transmission of a specific content (S303), the server 300 judges whether session information for the specific content exists in the storage unit 330 (S304). If the session information for the specific content does not exist in the storage unit 330, new session information is generated and stored within the storage unit 330 (S305) and the specific content is transmitted from the initial (start or beginning) position, e.g., in a streaming method (S306). For instance, the specific content in its entirety may be transmitted.

However, if the session information for the specific content exists in the storage unit 330 at step S304, the session information is read and thus the specific content is transmitted from a position where the transmission was interrupted (or from an appropriate time or frame just prior to interruption) (S307). For instance, only a part of the specific content is transmitted in a streaming method.

Then, if the transmission of the content is interrupted (S308), whether or not the content was completely transmitted is judged, e.g., by the server 300 (S109). If the content was completely transmitted, the session information for the content in the storage unit 330 may be deleted (S311). However, if the content has not been completely transmitted, the session information for the content inside the storage unit 330 may be updated (S311), e.g., so as to indicate how much of the content or up to what point in the content has been successfully transmitted. Such updated session information can then be used for subsequent access of the specific content (e.g., steps S304 and S307).

According to an embodiment, the mobile terminal 100 can communicate its playing information stored in the storage unit 150 to the server 300, so that the server 300 can store the same playing information in its storage unit 330 and use it to transmit an appropriate portion of the specific content to the mobile terminal in lieu of using the session information or in addition to using the session information. In such cases, the server can consider various information such as the session information and/or the playing information in order to transmit a portion of the requested content in an appropriate and efficient manner.

As aforementioned, in the mobile communication terminal according to the present invention, playing information for a specific content may be recorded. When the specific content is requested to be played, the specific content is played from a position where a play was interrupted according to the recorded playing information. Also, the server according to the present invention may record session information relating to a specific mobile communication terminal for a specific content, and transmits the specific content from a position where transmission was interrupted according to the session information when the specific content is requested to be transmitted. In the present invention, the user need not view again the portions of the multimedia contents that have been already played (or already transmitted from the server and played), and thus time and communication access costs (e.g., fees for downloading, viewing, etc.) can be saved. Also, inconvenience that the user has to search multimedia contents so as not to view again the portions that have been already played can be eliminated. Furthermore, since the fees for wireless data communication may be charged in units of data packets, communication costs can be saved.

As the present invention may be embodied in several forms, it should also be understood that the above-described embodiments are not limited by any of the details of the foregoing description, unless otherwise specified, but rather should be construed broadly as defined in the appended claims.

## Claims

1. A method for playing contents in a mobile communication terminal, comprising:
displaying a list of one or more contents;
selecting (S102) a specific content from the displayed list;
reading (S106) playing information for the content from a storage unit located in the mobile communication terminal;
requesting (S105, S106) a server to transmit the content from a specific playing position according to the playing information;
receiving the requested content from the server, and
playing (S107) the received content, **characterized in that**
new playing information of the specific content is generated (S104) and stored in the storage unit of the mobile communication terminal if the playing information for the specific content does not exist in the storage unit (S103), and
the playing information of the specific content is deleted (S110) only when the play for the content is interrupted (S108) and has been completely played (S109), and is updated (S111) only when the play for the content is interrupted (S108) and has not been completely played (S109).

2. The method of claim 1, further comprising:
updating (S111) playing information for the content in the storage unit; and
stopping the playing of the content when a play stop command for the content is inputted in the playing step.

3. The method of claim 1, wherein the step of selecting a content comprises:
connecting to the server (S101) and selecting a specific content (S102) from one or plural contents through the connection to the server;
searching whether or not playing information for the selected specific content exists in the storage unit (S103); and
when the playing information for the specific content exists in the storage unit, determining the specific content as the content that has not been completely played.

4. The method of claim 1, wherein in the step of displaying, the playing information stored in the storage unit is displayed after being synthesized.

5. The method of claim 1, wherein in the step of displaying, the list displaying for said one or plural contents is requested by connecting to the server, and then the list is displayed after being received.

6. The method of claim 1, wherein the playing information is composed of cookies for a web browser.

7. The method of claim 1, wherein the playing information comprises an identifier for the content and a previous playing position of the content.

8. The method of claim 7, wherein the identifier for the content comprises at least one of the following: a name for the content, a copyright owner of the content, a content provider of the content, and a total time for playing the content.

9. The method of claim 7, wherein the previous playing position of the content is composed of previous playing time of the content or the number of frames of the content that were played.

10. The method of claim 7, wherein the playing information further comprises a uniform resource locator (URL) for the content.

11. The method of claim 7, wherein the playing information further comprises a user's identifier (ID) and password.

12. The method of claim 1, wherein the specific position is a last successfully played frame or time period, a position in the content where the transmission from the server to the terminal was interrupted, or a position in the content just prior to the interruption.

13. A mobile communication terminal (100), comprising:
an RF transceiver (110);
a display unit (120);
a sound output unit (130);
a storage unit (150) for storing playing information for contents; and
a controller (160) for controlling the RF transceiver (110), the display unit (120), the sound output unit (130), and the storage unit (150) so that a content that was received from a server (30) through the RF transceiver (110) can be played through the display unit (120) and/or the sound output unit (130), wherein the controller (160) judges whether or not a specific content selected by a user was incompletely played according to the playing information stored in the storage unit (150), and if the controller (160) judges that the specific content was incompletely played, then the controller (160) requests the server (30) to transmit the specific content from a specific playing position according to the playing information so that the specific content can be played from the specific position, **characterized in that**
new playing information of the specific content is generated and stored in the storage unit (150) if the playing information for the specific content does not exist in the storage unit (150), and
the playing information of the specific content is deleted only when the play for the content is interrupted and has been completely played, and is updated only when the play for the content is interrupted and has not been completely played.

14. The mobile communication terminal of claim 13, wherein the playing information comprises a duration for which the specific content has been played, and an identifier composed of at least one of a name for the specific content, an address associated with the specific content, a copyright owner of the specific content, a content provider of the specific content, and a total time for playing the specific content.

15. The mobile communication terminal of claim 13, wherein the specific position is a last successfully played frame or time period, a position in the specific content where the transmission from the server (30) to the terminal (100) was interrupted, or a position in the specific content just prior to the interruption.

## Patentansprüche

1. Verfahren zum Wiedergeben von Inhalten in einem mobilen Datenübertragungsendgerät, umfassend:
Anzeigen einer Liste von einem oder mehreren Inhalten;
Auswählen (S102) eines bestimmten Inhaltes von der angezeigten Liste;
Lesen (S106) von Wiedergabeinformation für den Inhalt von einer Speichereinheit, die in dem mobilen Datenübertragungsendgerät gelegen ist;
Anfragen (S105, S106) bei einem Server, den Inhalt beginnend ab einer bestimmtem Wiedergabeposition gemäß der Wiedergabeinformation zu übermitteln;
Empfangen des angefragten Inhaltes von dem Server, und
Wiedergeben (S107) des empfangenen Inhalts, **dadurch gekennzeichnet, dass**
neue Wiedergabeinformation des bestimmten Inhalts erzeugt (S104) und in der Speichereinheit des mobilen Datenübertragungsendgerätes abgespeichert wird, wenn die Wiedergabeinformation für den bestimmten Inhalt nicht in der Speichereinheit vorhanden ist (103), und
die Wiedergabeinformation des bestimmten Inhalts nur gelöscht wird (S110), wenn das Wiedergeben des Inhaltes unterbrochen wird (S108) und dieser vollständig wiedergegeben wurde (S109), und nur aktualisiert wird (S111), wenn das Wiedergeben des Inhaltes unterbrochen wird (S108) und dieser nicht vollständig wiedergegeben wurde (S109).

2. Verfahren nach Anspruch 1, weiter umfassend:
Aktualisieren (S111) von Wiedergabeinformation für den Inhalt in der Speichereinheit; und
Abbrechen des Wiedergebens des Inhaltes, wenn ein Befehl zum Abbrechen des Wiedergebens für den Inhalt in dem Wiedergabeschritt eingegeben wird.

3. Verfahren nach Anspruch 1, wobei der Schritt des Auswählens eines Inhalts umfasst:
Verbinden mit einem Server (S101) und Auswählen eines bestimmten Inhalts (S102) aus einem oder mehreren Inhalten mittels der Verbindung mit dem Server;
Suchen, ob Wiedergabeinformation für den ausgewählten bestimmten Inhalt in der Speichereinheit vorhanden ist oder nicht (S103); und
wenn die Wiedergabeinformation für den bestimmten Inhalt in der Speichereinheit vorhanden ist, Bestimmen des bestimmten Inhalts als den Inhalt, der nicht vollständig wiedergegeben wurde.

4. Verfahren nach Anspruch 1, wobei in dem Schritt des Anzeigens die in der Speichereinheit gespeicherte Wiedergabeinformation angezeigt wird, nachdem sie erzeugt wurde.

5. Verfahren nach Anspruch 1, wobei in dem Schritt des Anzeigens die Liste von einem oder mehreren Inhalten durch Verbinden mit dem Server angefragt wird, und dann die Liste angezeigt wird, nachdem sie empfangen wurde.

6. Verfahren nach Anspruch 1, wobei die Wiedergabeinformation aus Cookies für einen Webbrowser gebildet ist.

7. Verfahren nach Anspruch 1, wobei die Wiedergabeinformation ein Kennzeichen für den Inhalt und eine vorangegangene Wiedergabeposition für den Inhalt aufweist.

8. Verfahren nach Anspruch 7, wobei das Kennzeichen für den Inhalt wenigstens eines der folgenden aufweist: einen Namen für den Inhalt, einen Copyright-Inhaber für den Inhalt, einen Anbieter des Inhalts, und eine Gesamtwiedergabezeit für den Inhalt.

9. Verfahren nach Anspruch 7, wobei die vorangegangene Wiedergabeposition für den Inhalt aus der vorangegangenen Wiedergabezeit des Inhalts oder der Anzahl der wiedergegebenen Frames des Inhalts gebildet ist.

10. Verfahren nach Anspruch 7, wobei die Wiedergabeinformation ferner eine Webadresse (URL) für den Inhalt aufweist.

11. Verfahren nach Anspruch 7, wobei die Wiedergabeinformation ferner eine Benutzererkennung (ID) und ein Passwort aufweist.

12. Verfahren nach Anspruch 1, wobei die bestimmte Position ein letzter erfolgreich abgespielter Frame oder Zeitraum, eine Position in dem Inhalt, an der die Übermittelung von dem Server zu dem Endgerät unterbrochen wurde, oder eine Position in dem Inhalt genau vor der Unterbrechung ist.

13. Mobiles Datenübertragungsendgerät (100), welches umfasst:
einen RF Sende-Empfänger (110);
eine Anzeigeeinheit (120);
eine Tonausgabeeinheit (130);
eine Speichereinheit (150) zum Speichern von Wiedergabeinformation für Inhalte; und
eine Steuereinheit (160) zum Steuern des RF Sende-Empfängers (110), der Anzeigeeinheit (120), der Tonausgabeeinheit (130), und der Speichereinheit (150), so dass ein Inhalt, der von einem Server (30) mittels des RF Sende-Empfängers (110) empfangen wurde, mittels der Anzeigeeinheit (120) und/oder der Tonausgabeeinheit (130) wiedergegeben werden kann, wobei die Steuereinheit (160) entscheidet, ob ein bestimmter von einem Benutzer ausgewählter Inhalt unvollständig gemäß der in der Speichereinheit (150) gespeicherten Wiedergabeinformation wiedergegeben wurde, und wenn die Steuereinheit entscheidet, dass der bestimmte Inhalt unvollständig wiedergegeben wurde, dann fragt die Steuereinheit (160) bei dem Server (30) an, den bestimmten Inhalt ab einer bestimmten Wiedergabeposition gemäß der Wiedergabeinformation zu übermitteln, so dass der bestimmte Inhalt ab der bestimmten Position wiedergegeben werden kann, **dadurch gekennzeichnet, dass**
neue Wiedergabeinformation des bestimmten Inhalts erzeugt (S104) und in der Speichereinheit des mobilen Datenübertragungsendgerätes abgespeichert wird, wenn die Wiedergabeinformation für den bestimmten Inhalt nicht in der Speichereinheit vorhanden ist (103), und
die Wiedergabeinformation des bestimmten Inhalts nur gelöscht wird (S110), wenn das Wiedergeben des Inhaltes unterbrochen wird (S108) und dieser vollständig wiedergegeben wurde (S109), und nur aktualisiert wird (S111), wenn das Wiedergeben des Inhaltes unterbrochen wird (S108) und dieser nicht vollständig wiedergegeben wurde (S109).

14. Mobiles Datenübertragungsendgerät nach Anspruch 13, wobei die Wiedergabeinformation einen Zeitraum umfasst, der angibt, wie lange der bestimmte Inhalt wiedergegeben wurde, und ein Kennzeichen, das wenigstens aus einen Namen für den bestimmten Inhalt, einer dem bestimmten Inhalt zugeordneten Adresse, einem Copyright-Inhaber für den Inhalt, einem Anbieter des Inhalts, und einer Gesamtwiedergabezeit für den Inhalt gebildet ist.

15. Mobiles Datenübertragungsendgerät nach Anspruch 13, wobei die bestimmte Position ein letzter erfolgreich abgespielter Frame oder Zeitraum, eine Position in dem bestimmten Inhalt, an der die Übermittelung von dem Server zu dem Endgerät unterbrochen wurde, oder eine Position in dem Inhalt genau vor der Unterbrechung ist.

## Revendications

1. Procédé de lecture de contenus dans un terminal de communication mobile, comprenant les étapes consistant à :
afficher une liste d'un ou de plusieurs contenus ;
sélectionner (S102) un contenu spécifique à partir de la liste affichée ;
lire (S106) des informations de lecture pour le contenu à partir d'une unité de mémoire placée dans le terminal de communication mobile ;
demander (S105, S106) à un serveur de transmettre le contenu à partir d'une position de lecture spécifique conformément aux informations de lecture ;
recevoir le contenu demandé du serveur, et
lire (S107) le contenu reçu, **caractérisé en ce que**
de nouvelles informations de lecture du contenu spécifique sont générées (S104) et mémorisées dans l'unité de mémoire du terminal de communication mobile si les informations de lecture pour le contenu spécifique n'existent pas dans l'unité de mémoire (S103), et
les informations de lecture du contenu spécifique sont effacées (S110) uniquement lorsque la lecture du contenu est interrompue (S108) et que le contenu a été complètement lu (S109), et sont mises à jour (S111) uniquement lorsque la lecture du contenu est interrompue (S108) et que le contenu n'a pas été complètement lu (S109).

2. Procédé selon la revendication 1, comprenant en outre les étapes consistant à:
mettre à jour (S111) les informations de lecture du contenu dans l'unité de mémoire ; et
arrêter la lecture du contenu lorsqu'une commande d'arrêt de lecture du contenu est délivrée en entrée à l'étape de lecture.

3. Procédé selon la revendication 1, dans lequel l'étape consistant à sélectionner un contenu comprend les étapes consistant à :
se connecter au serveur (S101) et sélectionner un contenu spécifique (S102) parmi un ou plusieurs contenus par l'intermédiaire de la connexion au serveur ;
chercher si oui ou non des informations de lecture du contenu spécifique sélectionné se trouvent dans l'unité de mémoire (S103) ; et
lorsque les informations de lecture du contenu spécifique se trouvent dans l'unité de mémoire, déterminer le contenu spécifique en tant que contenu qui n'a pas été complètement lu.

4. Procédé selon la revendication 1, dans lequel à l'étape d'affichage, les informations de lecture mémorisées dans l'unité de mémoire sont affichées après avoir été synthétisées.

5. Procédé selon la revendication 1, dans lequel à l'étape d'affichage, l'affichage de la liste pour ledit un ou lesdits plusieurs contenus est demandé en se connectant au serveur, puis la liste est affichée après avoir été reçue.

6. Procédé selon la revendication 1, dans lequel les informations de lecture sont composées de cookies pour un navigateur Internet.

7. Procédé selon la revendication 1, dans lequel les informations de lecture comprennent un identifiant du contenu et une position de lecture précédente du contenu.

8. Procédé selon la revendication 7, dans lequel l'identifiant du contenu comprend au moins l'un parmi ce qui suit : un nom du contenu, un titulaire du droit d'auteur du contenu, un fournisseur de contenu du contenu, et un temps total de lecture du contenu.

9. Procédé selon la revendication 7, dans lequel la position de lecture précédente du contenu est composée d'un temps de lecture précédent du contenu ou du nombre de trames du contenu ayant été lues.

10. Procédé selon la revendication 7, dans lequel les informations de lecture comprennent en outre une adresse universelle (URL) du contenu.

11. Procédé selon la revendication 7, dans lequel les informations de lecture comprennent en outre un identifiant d'utilisateur (ID) et un mot de passe.

12. Procédé selon la revendication 1, dans lequel la position spécifique correspond à une dernière trame lue avec succès ou à une période de temps, une position dans le contenu à laquelle la transmission du serveur au terminal a été interrompue, ou une position dans le contenu juste avant l'interruption.

13. Terminal de communication mobile (100), comprenant :
un émetteur-récepteur RF (110) ;
une unité d'affichage (120) ;
une unité de sortie de son (130) ;
une unité de mémoire (150) destinée à mémoriser des informations de lecture pour des contenus ; et
un contrôleur (160) destiné à commander l'émetteur-récepteur RF (110), l'unité d'affichage (120), l'unité de sortie de son (130), et l'unité de mémoire (150) de sorte qu'un contenu qui a été reçu depuis un serveur (30) par l'intermédiaire de l'émetteur-récepteur RF (110) peut être lu par l'intermédiaire de l'unité d'affichage (120) et/ou de l'unité de sortie de son (130), dans lequel le contrôleur (160) juge si oui ou non un contenu spécifique sélectionné par un utilisateur a été lu de manière incomplète conformément aux informations de lecture mémorisées dans l'unité de mémoire (150), et si le contrôleur (160) juge que le contenu spécifique a été lu de manière incomplète, alors le contrôleur (160) demande au serveur (30) de transmettre le contenu spécifique à partir d'une position de lecture spécifique conformément aux informations de lecture de sorte que le contenu spécifique peut être lu à partir de la position spécifique, **caractérisé en ce que**
de nouvelles informations de lecture du contenu spécifique sont générées et mémorisées dans l'unité de mémoire (150) si les informations de lecture du contenu spécifique n'existent pas dans l'unité de mémoire (150), et
les informations de lecture du contenu spécifique sont effacées uniquement lorsque la lecture du contenu est interrompue et que le contenu a été complètement lu, et sont mises à jour uniquement lorsque la lecture du contenu est interrompue et que le contenu n'a pas été complètement lu.

14. Terminal de communication mobile selon la revendication 13, dans lequel les informations de lecture comprennent une durée pendant laquelle le contenu spécifique a été lu, et un identifiant composé d'au moins l'un parmi un nom du contenu spécifique, une adresse associée au contenu spécifique, un titulaire du droit d'auteur du contenu spécifique, un fournisseur de contenu du contenu spécifique, et un temps total de lecture du contenu spécifique.

15. Terminal de communication mobile selon la revendication 13, dans lequel la position spécifique correspond à la dernière trame lue avec succès ou à une période de temps, une position dans le contenu spécifique à laquelle la transmission du serveur (30) au terminal (100) a été interrompue, ou une position dans le contenu spécifique juste avant l'interruption.
